# EUROPEAN PATENT APPLICATION

(11) **EP 2 094 036 A2**
(43) Date of publication of application: **26.08.2009**
(21) Application number: 09153298.6
(22) Date of filing: 20.02.2009
(51) Int. Cl.: H04W 8/18

(54) **Storage system of mobile terminal and access control method**

(30) Priority: 21.02.2008 JP 2008040629
(71) Applicant: NTT DoCoMo, Inc., Chiyoda-ku Tokyo 100-6150 (JP)
(72) Inventor: Minami, Motoi, NTT DoCoMo, Inc., Sanno Park Tower, c/o Intell. Prop. Dpmt, Tokyo 100-6150 (JP); Hotani, Sanae, NTT DoCoMo, Inc., Sanno Park Tower, c/o Intell. Prop. dpmt, Tokyo 100-6150 (JP); Takahashi, Kazuhiko, NTT DoCoMo, Inc., Sanno Park Tower, c/o Intell. Prop. Dpmt, Tokyo 100-6150 (JP); Yamauchi, Yukio, NTT DoCoMo Technology, Inc., Kokusai-Akasaka Bldg., Tokyo 107-0052 (JP)
(74) Representative: HOFFMANN EITLE

(57) **Abstract**

Provided is a storage system of a mobile terminal (100) and an access control method for more securely preventing unauthorized access to data stored in a storage medium (150) attachable and detachable to and from the mobile terminal (100). The storage system of the mobile terminal (100) includes the steps of: receiving an SMS message from an OTA server (30); relaying the SMS message (m1) including an access restriction request to request restriction of access to storage data stored in the USIM (150); and setting the USIM (150) to an access restriction state in which access from the outside to the storage data is restricted based on the access restriction request included in the relayed SMS message (m1).

## Description

### BACKGROUND OF THE INVENTION

### 1, Field of the Invention

The present invention relates to a storage system of a mobile terminal and an access control method for restricting access to storage data stored in a storage medium attachable and detachable to and from the mobile terminal provided with a radio communication function.

### 2. Description of the Related Art

Along with recent developments in function, mobile terminals each provided with a radio communication function, such as mobile telephone terminals, can store a large amount of data including personal information, such as telephone books, short mails (SMS) and user certificates.

For example in the third generation mobile telephone system (3GPP) using the W-CDMA system, the above-described personal information can be stored in a storage medium, specifically a universal subscriber identity module (USIM), which is attached and detached to and from a card slot provided in a mobile terminal.

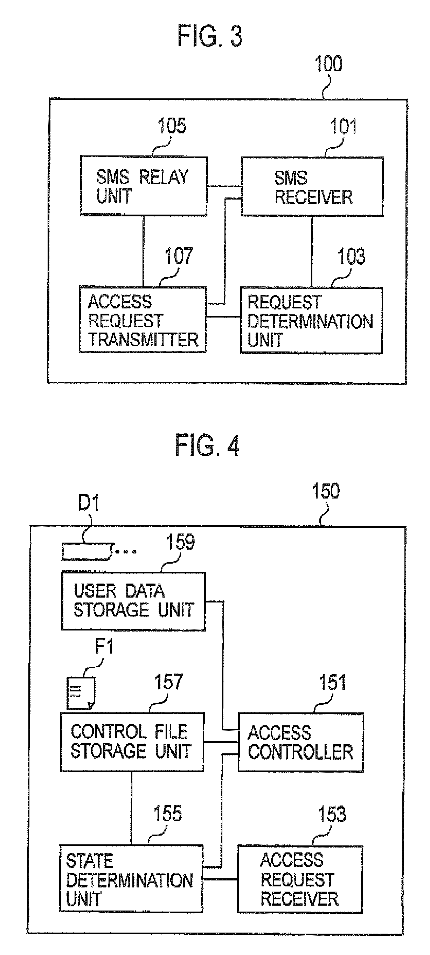

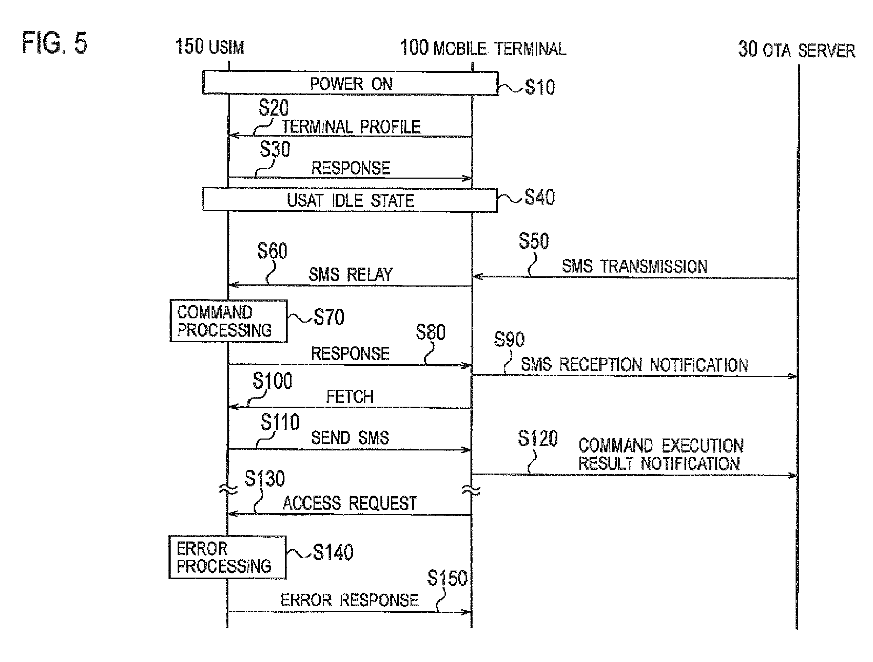

Such a mobile terminal having a card slot for a USIM includes so-called "a lock function," a function of restricting access to data stored in the USIM (see, for example, page 14 and Figs. 4 and 5 of Japanese Patent Translation Publication No. 2001-508253).

Specifically, in response to a request made by an external device to activate the lock function, the mobile terminal sets a function of a controller to control access to the USIM to a lock mode. When the function of the controller is set to the lock made, the access to the data stored in the USIM inserted into the card slot of the mobile terminal is restricted.

However, the above-described conventional method for restricting access to data stored in an USIM (storage medium) has the following problem. That is, even when a mobile terminal is set to the lock mode, if a USIM inserted into the mobile terminal is taken out from a card slot thereof and is inserted into a card slot of another mobile terminal that is set to the lock mode, the data stored in the USIM is made accessible. For this reason, if important data, such as personal information, is stored in the USIM, the conventional method might allow an unauthorized access to the important data.

### SUMMARY OF INVENTION

The present invention has been made in view of the above problem. Accordingly, an object of the present invention is to provide a storage system of a mobile terminal and an access control method that more securely prevent unauthorized access to data stored in a storage medium attachable and detachable to and from the mobile terminal.

To solve the above-described problem, the present invention has the following aspects. Firstly, a first aspect of the present invention provides a storage system of a mobile terminal, which includes a mobile terminal (mobile terminal 100) having a radio communication function and a storage medium (USIM 150) attachable and detachable to and from the mobile terminal. The mobile terminal includes a control signal receiver (SMS receiver 101) configured to receive a control signal (SMS message M1 from an external device of the mobile terminal and a relay unit (SMS relay unit 105) configured to relay, to the storage medium, the control signal including an access restriction request (access restriction request R1) requesting restriction of access to storage data (user data D1) stored in the storage medium. The storage medium includes an access controller (access controller 151) configured to set the storage medium to an access restriction state in which access from the outside of the mobile terminal to the storage data is restricted, based on the access restriction request included in the control signal relayed by the relay unit.

In such a storage system of a mobile terminal, the storage medium is set to an access restriction state in which access from the outside of the mobile terminal to the storage data is restricted, based on the access restriction request included in the control signal relayed by the mobile terminal. In other words, the storage medium itself is set to the access restriction state not by the mobile terminal but by the access controller operating on the storage medium.

For this reason, even if the storage medium inserted into the mobile terminal is taken out from the card slot thereof and then the taken-out storage medium is inserted into a card slot of another Mobile terminal, the storage data stored in the storage medium, such as telephone books, short mails (SMS), and user certificates is inaccessible.

In short, such a storage system of a mobile terminal makes it possible to more securely prevent unauthorized access to the data stored in the storage medium attachable and detachable to and from the mobile terminal.

A second aspect of the present invention relates to the first aspect of the invention, in which: the mobile terminal includes a request determination unit (request determination unit 103) determining if the control signal received by the control signal receiver includes the access restriction request; and the relay unit relays the control signal including the access restriction request to the storage medium, in a case where the request determination unit determines that the control signal includes the access control request.

A third aspect of the present invention relates to the first aspect of the invention, in which: the mobile terminal includes a transmitter (access request transmitter 107) transmitting an access request (access request R2) to the storage data to the storage medium; the storage medium includes an access request receiver (access request receiver 153) receiving the access request, and a state determination unit (state determination unit 155) determining if the storage medium is set to the access restriction state; and the access controller rejects the access request, in a case where the state determination unit determines that the storage medium is set to the access restriction state.

A fourth aspect of the present invention relates to the third aspect of the invention, in which: the storage medium has a control file (control file F1) showing if the storage medium is in the access restriction state; the access controller rewrites a content of the control file into the access restriction state based on the access restriction request; and the state determination unit determines if the storage medium is set to the access restriction state based on the content of the control file.

A fifth aspect of the present invention provides an access control method which restricts access to storage data stored in a storage medium attachable and detachable to and from a mobile terminal provided with a radio communication function. The access control method includes the steps of: receiving a control signal from the outside of the mobile terminal; relaying, to the storage medium, the control signal including an access restriction request requesting restriction of access to the storage data; and setting the storage medium to an access restriction state in which (access from the outside of the mobile terminal to the storage data is restricted, based on the access restriction request included in the relayed control signal.

According to the aspects of the present invention, it is possible to provide a storage system of a mobile terminal and an access control method thereof that more securely prevent unauthorized access to storage data stored in the storage medium attachable and detachable to and from the mobile terminal.

Note that the entire contents of the Japanese Patent Application No. 2008-040629, filed on February 21, 2008, are incorporated herein by reference.

### BRIEF DESCRIPTION OF THE DRAWINGS

Fig. 1 is a schematic configuration view of an overall communication system including a mobile terminal 100 according to an embodiment of the present invention;
Fig. 2 is a schematic block diagram of the mobile terminal 100 and a USIM 150 according to the embodiment of the present invention;
Fig. 3 is a functional block diagram of the mobile terminal 100 according to the embodiment of the present invention;
Fig. 4 is a functional block diagram of the USIM 150 according to the embodiment of the present invention;
Fig. 5 is an operational sequence diagram of the mobile terminal 100 and the USIM 150 that restrict access to storage data of the USIM 150 according to the embodiment of the present invention; and
Fig. 6A and 6B are an image view of an SMS message M1 according to the embodiment of the present invention.

### DESCRIPTION OF THE PREFERRED EMBODIMENTS

Preferred embodiments of the present invention will be described below. Specifically, the description will be given in the following order: (1) Schematic Configuration of Overall Communication System including Mobile Terminal, (2) Configuration of Storage System of Mobile Terminal, (3) Operation of Storage System of Mobile Terminal, (4) Advantageous Effects, and (5) Other Embodiments.

In the following description of the drawings, the same or similar reference numerals are given to denote the same or similar portions. However, it should be noted that the drawings are schematic and ratios of dimensions and the like are different from actual ones.

Therefore, specific dimensions and the like should be determined by taking into consideration the following description. Moreover, as a matter of course, also among the drawings, there are included portions in which dimensional relationships and ratios are different from each other.

### (1) Schematic Configuration of Overall Communication System including Mobile Terminal

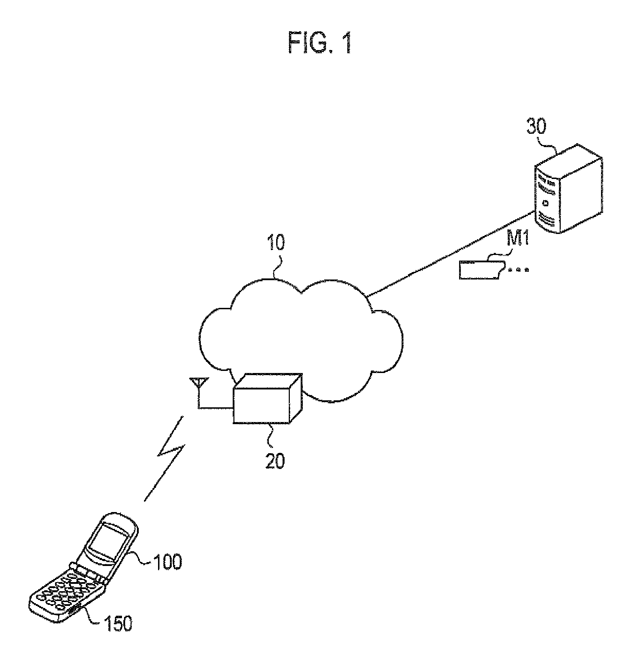

Fig. 1 is a schematic configuration view of an overall communication system including a mobile terminal 100 according to the present embodiment. As shown in Fig. 1, the communication system according to the present embodiment includes a communication network 10, a radio base station 20, an Over The Air server 30 (hereinafter, OTA server 30), and the mobile terminal 100. The communication system according to the present embodiment is the third generation mobile telephone system adopting the W-CDMA system.

The radio base station 20 and the OTA server 30 are connected to the communication network 10. The radio base station 20 executes radio communications with the mobile terminal 100 according to the W-CDMA system. In addition, according to a short message service (SMS), the mobile terminal 100 can transmit/receive an SMS message M1 through the radio base station 20.

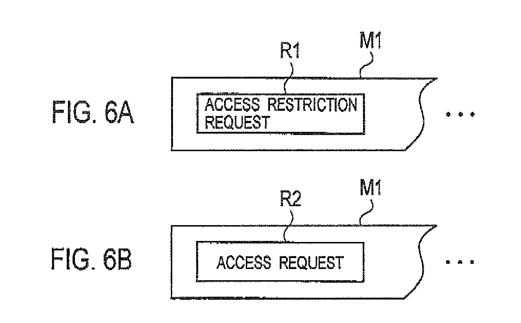

The OTA server 30 performs transmission/reception of the SMS message M1 with the mobile terminal 100. In particular, in the present embodiment, the OTA server 30 transmits to the mobile terminal 100 an SMS message M1 including an access restriction request R1 (unillustrated in Fig. 1 and see Fig. 6A) requesting restriction of access to storage data stored in a universal subscriber identity module (USIM) 150 (hereinafter, USIM 150) inserted into the mobile terminal 100. In the present embodiment, the SMS message M1 constitutes a control signal.

The OTA server 30 (OTA platform) performs encryption or the like on the SMS message M1 including the access control request R1, and then transmits the SMS message to the mobile terminal 100 as a secure packet.

The mobile terminal 100 is a mobile telephone terminal provided with a radio communication function executing radio communications with the radio base station 20. The mobile terminal 100 has a card slot (unillustrated) into which the USIM 150 is inserted.

The USIM 150 is a storage medium attachable and detachable to and from the mobile terminal 100. The USIM 150 stores files relating to telephone books, short mails (SMS), and user certificates, which are used by the mobile terminal 100. In the present embodiment, the mobile terminal 100 and the USIM 150 constitute a storage system of the mobile terminal.

### (2) Configuration of Storage System of Mobile Terminal

Next, the description will be given of the configurations of the mobile terminal 100 and the USIM 150 which constitute the storage system of the mobile terminal in the present embodiment. Specifically, the description will be given in the following order: (2.1) schematic Block Configurations of Mobile Terminal and Storage Medium, (2.2) Functional Block Configuration of Mobile Terminal and (2.3) Functional Block Configuration of Storage Medium.

### (2.1) Schematic Block Configurations of Mobile Terminal and Storage Medium

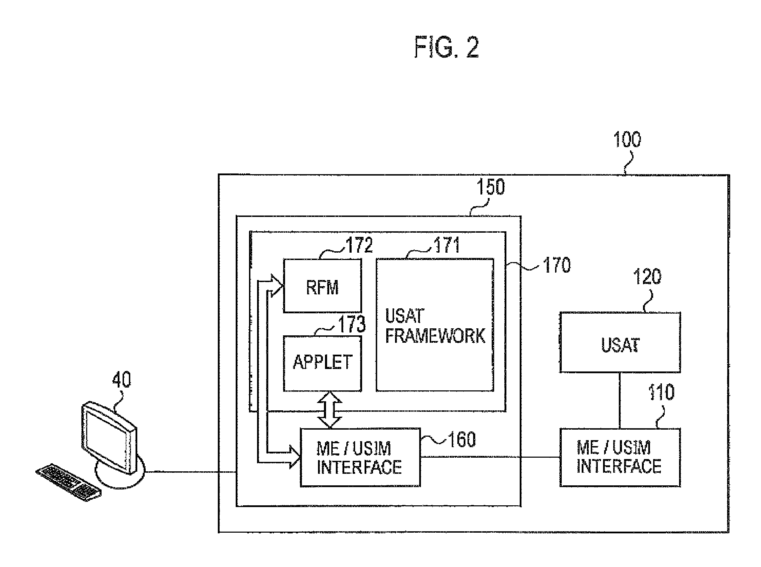

Fig. 2 is a schematic block configuration view of the mobile terminal 100 and the USIM 150. As shown in Fig. 2, the mobile terminal 100 includes a mobile equipment/USIM interface 110 (hereinafter, ME/USIM interface 110) and a USIM application toolkit 120 (hereinafter, USAT 120).

The ME/USIM interface 110 provides various interfaces between the mobile terminal 100 (ME) and the USIM 150. The USAT 120 is configured of an application using the USAT function. The USAT 120 provides a function to control the USIM 150, such as readout and update of the storage data stored in the USIM 150.

Similar to the mobile terminal 100, the USIM 150 includes an ME/USIM interface 160 and a USAT 170.

The USAT 170 has a USAT framework 171, a remote file management 172 (hereinafter, RFM 172), and an applet 173.

The USAT framework 171 provides a framework of the USAT. The RFM 172 provides a function to remotely manage the various files stored in the USIM 150. The applet 173 is a small application which is executed on the USIM 150. In particular in the present embodiment, the applet 173 provides a function to restrict access to the storage data stored in the USIM 150.

Note that contents of the storage data stored in the USIM 150 and a control file F1 (unillustrated in Fig. 2 and see Fig. 4) may be updated by using a personal computer 40 provided with a card slot (reader/writer) into which the USIM 150 can be inserted.

### (2.2) Functional Block Configuration of Mobile Terminal

Fig. 3 is a functional block diagram of the mobile terminal 100. As shown in Fig. 3, the mobile terminal 100 includes an SMS receiver 101, a request determination unit 103, an SMS relay unit 105, and an access request transmitter 107. Note that portions relating to the present invention will be mainly described below. Accordingly, it should be noted that the mobile terminal 100 may include a block (such as baseband processor) which is necessary for achieving a function as the mobile terminal 100 but is unillustrated or is not described.

The SMS receiver 101 receives an SMS message M1 from an external device of the mobile terminal 100, specifically from the OTA server 30. In the present embodiment, the SMS receiver 101 constitutes a control signal receiver.

The request determination unit 103 determines if the SMS message M1 received by the SMS receiver 101 is an SMS message M1 for OTA. Specifically, the request determination unit 103 determines if the SMS message received by the SMS receiver 101 includes an access restriction request R1.

Fig. 6A shows an image view of the SMS message M1 including the access restriction request R1. The access restriction request R1 requests restriction of access to storage data, specifically user data D1, stored in the USIM 150.

The SMS relay unit 105 relays the SMS message M1 including the access restriction request R1 to the USIM 150. In the present embodiment, the SMS relay unit 105 constitutes a relay unit. The SMS relay unit 105 relays the SMS message M1 including the access control request R1 to the USIM 150 in a case where the request determination unit 103 determines that the SMS message M1 includes the access restriction request R1. In addition, the SMS relay unit 105 can also relay an SMS message M1 including an access request R2 (see, Fig. 6B) to the USIM 150. Fig. 6B shows an image view of the SMS message M1 including the access request R2.

The access request transmitter 107 transmits, to the USIM 150, the access request R2 to the storage data (user data D1) stored in the USIM 150. In the present embodiment, the access request transmitter 107 constitutes a transmitter.

The access request transmitter 107 requests the SMS relay unit 105 to relay the SMS message M1 to the USIM 150 in a case where the SMS message M1 received from the OTA server 30 by the SMS receiver 101 includes the access request R2. The access request transmitter 107 can also transmit the SMS message M1 including the access request R2 to the USIM 150, based on an operation of the mobile terminal, 100.

### (2.3) Functional Block Configuration of Storage Medium

Fig. 4 is a functional block diagram of the USIM 150. As shown in Fig. 4, the USIM 150 includes an access controller 151, an access request receiver 153, a state determination unit 155, a control file storage unit 157, and a user data storage unit 159.

The access controller 151 restricts access from the outside to storage data, based on the access restriction request R1 included in the SMS message M1 relayed by the SMS relay unit 105 of the mobile terminal 100. Specifically, the access controller 151 sets the USIM 150 to an access restriction state (that is, a locked state) in which access from the outside to the user data D1 is restricted, based on the access restriction request R1 received from the mobile terminal 100.

When the access restriction state is set, authorization to execute readout or update of a specific file included in the user data D1 is restricted. The specific file includes information relating to telephone books, short mails (SMS), and user certificates.

Specifically, the access controller 151 sets the USIM 150 to the access restriction state by executing a command script shown in a data portion of the SMS message M1, after authenticating the SMS message M1 relayed by the SMS relay unit 105 of the mobile terminal 100. More specifically, the access controller 151 rewrites the content of the control file F1 into an access restriction state, based on the received access restriction request R1.

In addition, the access controller 151 rejects the access request to the user data D1 if the state determination unit 155 determines that the USIM 150 is set to the access restriction state.

Specifically, if the access request such as a readout request or an update request for a specific file included in the user data D1 is acquired while the USIM 150 is set to the access restriction state, the access controller 151 sends an error response to the mobile terminal 100 and does not execute the readout or update of the specific file. Note that the content displayed on a display unit (unillustrated) of the mobile terminal 100 (for example, display of an error message) depends on functions provided for the mobile terminal 100.

In addition, the access controller 151 rewrites the content of the control file F1 into a normal state (that is, an unlocked state) if the SMS message M1 which releases the access restriction state is received. If an access request is acquired while the USIM 150 is set to the normal state, the access controller 151 executes the access request.

The access request receiver 153 receives an access request from the mobile terminal 100. Specifically, the access request receiver 153 receives the SMS message M1 including the access request R2 which is relayed by the SMS relay unit 105 of the mobile terminal 100. The access request receiver 153 notifies the state determination unit 155 of the access request R2 included in the received SMS message M1.

The state determination unit 155 determines if the USIM 150 is set to the access restriction state. Specifically, if the access request R2 is notified from the access request receiver 153, the state determination unit 155 determines, based on the content of the control file F1, if the USIM 150 is set to the access restriction state. The state determination unit 155 notifies the access controller 151 if the USIM 150 is set to the access restriction state.

The control file storage unit 157 stores the control file F1. The control file F1 shows if the USIM 150 is in the access restriction state.

The user data storage unit 159 stores the user data D1 including files relating to telephone books, short mails (SMS), and user certificates.

### (3) Operation of Storage System of Mobile Terminal

Next, the description will be given of operations of the mobile terminal 100 and the USIM 150 which constitute the storage system of the mobile terminal in the present embodiment. Specifically, the operation of restricting access to storage data stored in the USIM 150 will be described.

Fig. 5 is an operational sequence diagram of the mobile terminal 100 and the USIM 150, which restricts access to storage data stored in the USIM 150. As shown in Fig. 5, at step S10, power is supplied to the mobile terminal 100 (and the USIM 150). Then, the mobile terminal 100 and the USIM 150 start up.

At step S20, the mobile terminal 100 notifies the USIM 150 of a terminal profile of the mobile terminal 100.

At step S30, the USIM 150 notifies the mobile terminal 100 of a response to the acquisition of the terminal profile.

At step S40, the USAT 120 of the mobile terminal 100 and the USAT 170 of the USIM 150 are set to an idle state.

At step S50, the OTA server 30 transmits the SMS message M1 including the access restriction request R1 to the mobile terminal 100. The access restriction request R1 includes a group of commands (SELECT command and UPDATE BINARY command) to the USIM 150 to update EF_LOCK.

At step S60, the mobile terminal 100 determines that the access restriction request R1 is included in the SMS message M1 received from the OTA server 30, and relays the SMS message M1 to the USIM 150.

At step S70, the USIM 150 executes command processing, based on the access restriction request R1 included in the received SMS message M1. Specifically, the USIM 150 executes the command script displayed on the data portion of the SMS message M1, so that the USIM 150 is set to the access restriction state.

At step S80, the USIM 150 notifies the mobile terminal 100 of a response to the received SMS message M1.

At step S90, the mobile terminal 100 transmits, to the OTA server 30, an SMS reception notification showing that the SMS message M1 is received.

At step S100, the mobile terminal 100 requests the USIM 150 to execute the command script. Specifically, the mobile terminal 100 instructs the USIM 150 to fetch the command script.

At step S110, the USIM 150 executes SEND SMS, based on the fetch instruction from the mobile terminal 100. With the command script being executed, the USIM 150 notifies the mobile terminal 100 of an execution result of the command script.

At step S120, the mobile terminal 100 transmits, to the OTA server 30, a command execution result notification showing that the command to set the USIM 150 to the access restriction state is executed, based on the information (SEND SMS) notified from the USIM 150.

Subsequently, at step S130, the mobile terminal 100 transmits, to the USIM 150, an access request to the user data D1 stored in the USIM 150. The access request is transmitted to the USIM 150 when a user of the mobile terminal 100 operates the mobile terminal 100. In addition, the mobile terminal 100 can receive the SMS message M1 (see Fig. 6B) including the access request R2 from the OTA server 30, and transmit the received SMS message M1 to the USIM 150.

At step 140, the USIM 150 determines if the USIM 150 is set to the access restriction state. Specifically, in a case where the access request is acquired, the USIM 150 determines based on the content of the control file F1 if the USIM 150 is set to the access restriction state.

Since the USIM 150 is set to the access restriction state in the processing at step S70, the USIM 150 rejects the access request to the user data D1 and executes error processing.

At step S150, the USIM 150 notifies the mobile terminal 100 of an error response to the access request. That is, the USIM 150 notifies the mobile terminal 100 that the access request to the user data D1 is rejected and the error processing is executed.

### (4) Advantageous Effects

In the storage system of the mobile terminal according to the present embodiment, the USIM 150 is set to the access restriction state in which access from the outside to the user data D1 is restricted according to the access restriction request R1 included in the SMS message M1 relayed by the mobile terminal 100. That is, not the mobile terminal 100 but the USIM 150 itself is set to the access restriction state by the access controller 151 operating on the USIM 150. In addition, the access controller 151 rejects the acquired access request to the user data D1, in a case where the state determination unit 155 determines that the USIM 150 is set to the access restriction state.

For this reason, even if the USIM 150 is taken out from the card slot of the mobile terminal 100 and the taken-out USIM 150 is inserted into a card slot of another mobile terminal, the user data D1 stored in the USIM 150, such as telephone books, short mails (SMS), and user certificates is inaccessible.

In other words, such a storage system of the mobile terminal makes it possible to more securely prevent unauthorized access to the data stored in the USIM 150 attachable and detachable to and from the mobile terminal 100.

In the present embodiment, the SMS relay unit 105 relays the SMS message M1 including the access restriction request R1 to the USIM 150, in a case where the request determination unit 103 determines that the SMS message M1 includes the access restriction request R1. For this reason, the SMS message M1 which does not relate to the USIM 150 can be prevented from being relayed.

In the present embodiment, the state determination unit 155 determines based on the content of the control file F1 if the USIM 150 is set to the access restriction state. Accordingly, it can be quickly determined if the USIM 150 is set to the access restriction state by using the control file F1 having a simple configuration.

In the present embodiment, the SMS message M1 including the access request R2 can also be received from the OTA server 30. Accordingly even when the mobile terminal 100 is stolen or lost, the mobile terminal 100 can be remotely set to the access restriction state.

### (5) Other Embodiments

As described above, the content of the present invention has been disclosed by using one embodiment of the present invention. However, it should not be understood that the description and drawings which constitute one part of this disclosure limit the present invention. From this disclosure, various alternative embodiments will be apparent to a person skilled in the art.

For example, in the above-described embodiment of the present invention, it is determined based on the control file F1 if the USIM 150 is set to the access restriction state. However, the control file F1 does not always have to be used. For example, every time an access request to the user data D1 is acquired, the access request is tested. Then, when access to user data D1 which is set to the access restriction state is rejected, it may be determined that the user data D1 is set to the access restriction state.

In the above-described embodiment, when the request determination unit 103 determines that the access restriction request R1 is included in the SMS message M1, the SMS message M1 including the access restriction request R1 is relayed to the USIM 150. However, it is also possible that all the SMS messages M1 are relayed to the USIM 150 and then only the SMS message M1 necessary for the USIM 150 is acquired.

In the above-described embodiment, the user data D1 is set to the access restriction state by using the entire user data D1 as a target. However, for example, it is also possible that the user data D1 is set to the access restriction state only by using files relating to personal information as a target.

In the above-described embodiment, the SMS message M1 is used as a control signal. However, it is also possible that the access restriction request R1 and the access request R2 are transmitted by using not the SMS message M1 but, for example, general e-mails or dedicated control signals.

In the above-described embodiment, the description has been given by using the third generation mobile telephone system adopting the W-CDMA system as an example. However, the radio communication system to which the present invention is applied is not limited to the third generation mobile telephone system adopting the W-CDMA system.

As described above, the present invention includes, as a matter of course, various embodiments which are not described herein. Accordingly, the technical scope of the present invention is defined only by the particular matters included in the scope of claims which are appropriate from this disclosure.

## Claims

1. A storage system of a mobile terminal, comprising:
a mobile terminal including a radio communication function; and
a storage medium attachable and detachable to and from the mobile terminal, wherein
the mobile terminal includes
a control signal receiver configured to receive a control signal from the outside of the mobile terminal,
a relay unit configured to relay, to the storage medium, the control signal including an access restriction request to request restriction of access to storage data stored in the storage medium, and
the storage medium includes an access controller configured to set the storage medium to an access restriction state in which access to the storage data from the outside of the mobile terminal is restricted, based on the access restriction request included in the control signal which is relayed by the relay unit.

2. The storage system of the mobile terminal according to claim 1, wherein the mobile terminal includes a request determination unit configured to determine if the control signal received by the control signal receiver includes the access restriction request, and
the relay unit relays the control signal including the access restriction request to the storage medium, in a case where the request determination unit determines that the control signal includes the access restriction request.

3. The storage system of the mobile terminal according to claim 1, wherein the mobile terminal includes a transmitter configured to transmit, to the storage medium, an access request to the storage data,
the storage medium includes
an access request receiver configured to receive the access request, and
a state determination unit configured to determine if the storage medium is set to the access restriction state, and
the access controller rejects the access request, in a case where the state determination unit determines that the storage medium is set to the access restriction state.

4. The storage system of the mobile terminal according to claim 3, wherein the storage medium has a control file indicating if the storage medium is in the access restriction state, based on the access restriction request, the access controller rewrites a content of the control file to indicate the access restriction state, and
based on the content of the control file, the state determination unit determines if the storage medium is set to the access restriction state.

5. An access control method for restricting access to storage data stored in a storage medium attachable and detachable to and from a mobile terminal including a radio communication function, the access control method comprising the steps of:
receiving a control signal from the outside of the mobile terminal;
relaying, to the storage medium, the control signal including an access restriction request to request restriction of access to the storage data; and
setting the storage medium to an access restriction state in which access to the storage data from the outside of the mobile terminal is restricted, based on the access restriction request included in the relayed control signal.
